# EUROPÄISCHE PATENTSCHRIFT

(11) **EP 0 803 888 B1**
(45) Veröffentlichungstag und Bekanntmachung des Hinweises auf die Patenterteilung: **13.11.2002**
(21) Anmeldenummer: 97810153.3
(22) Anmeldetag: 17.03.1997
(51) Int. Cl.: H01H 31/20, H02B 13/035, H01H 33/02

(54) **Trennschalter**
Disconnecting switch
Interrupteur-séparateur

(30) Priorität: 22.04.1996 DE 19615912
(43) Veröffentlichungstag der Anmeldung: 29.10.1997
(73) Patentinhaber: ABB Schweiz AG, 5400 Baden (CH)
(72) Erfinder: Füchsle, Dieter, 5304 Endingen (CH); Zbinden, Markus, 8600 Dübendorf (CH)
(74) Vertreter: ABB Patent Attorneys

(56) Entgegenhaltungen:
- DE-A1- 3 035 870
- DE-B1- 2 838 373

## Beschreibung

### TECHNISCHES GEBIET

Bei der Erfindung wird ausgegangen einem Trennschalter nach dem gemeinsamen Oberbegriff von Patentanspruch 1 und Patentanspruch 4. Ein solcher Trennschalter wird mit Vorteil als Mehrfachtrenner in einer metallgekapselten gasisolierten Schaltanlage verwendet und kann je nach Bedarf zwischen zwei von mehreren beliebigen Anlagenkomponenten Verbindungen herstellen oder diese Verbindungen auftrennen, wie etwa zwischen einem Leistungsschalter und einer beliebigen zweier Sammelschienen, zwischen den beiden Sammelschienen oder zwischen dem Leistungsschalter und einem Erdungskontakt.

### STAND DER TECHNIK

Die Erfindung nimmt auf einen Stand der Technik von Schaltvorrichtungen Bezug wie er in der älteren deutschen Patentanmeldung Aktenzeichen P 195 11 168.0, eingereicht am 28.3.1995, beschrieben ist. Ein in dieser Patentanmeldung beschriebener Trennschalter weist ein mit einem Isoliergas gefülltes, geerdetes Trennergehäuse und zwei im Trennergehäuse angeordnete, axialsymmetrisch ausgebildete Schaltstellen mit jeweils einem feststehenden und einem längs der Schaltstellenachse beweglichen Schaltstück auf sowie eine ins Trennergehäuse geführte Antriebswelle und ein Getriebe, welches Kraft von der Antriebswelle auf das bewegliche Schaltstück übertragen kann. Das Getriebe enthält einen von der Antriebswelle gedrehten Kurbelarm, an dem zwei Koppelstangen angelenkt sind. Die von den Anlenkstellen abgewandten Enden der Koppelstangen wirken auf bewegliche Kontakte der Schaltstellen, welche in Richtung der Schaltstellenachse verschieblich geführt sind. Durch geeignete Bemessung der einzelnen Teile des Getriebes, wie etwa der Länge und der Winkelpositionen der Koppelstangen, kann so das Öffnen und Schliessen der beiden Schaltstellen entsprechend vorgegebenen Schalthandlungsanforderungen der Anlage gesteuert werden.

### KURZE DARSTELLUNG DER ERFINDUNG

Der Erfindung, wie sie in den Patentansprüchen 1 and 4 angegeben ist, liegt die Aufgabe zugrunde, einen Trennschalter der eingangs genannten Art anzugeben, der sich durch eine kompakte Bauweise auszeichnet und zugleich in einfacher Weise eine äusserst genaue Steuerung der einzelnen Schaltstellen ermöglicht.

Der Trennschalter nach der Erfindung zeichnet sich dadurch aus, dass er äusserst platzsparend ausgebildet ist. Dies ist zum einen dadurch bedingt, dass sein zwischen Antriebswelle und beweglichen Schaltstücken wirkendes Getriebe von der Antriebswelle gelieferte Antriebskraft direkt in Kräfte umwandelt, die in Richtung der Schaltstellenachsen wirken, und da zum anderen beim Getriebe Kopplungsstangen zwischen der Antriebswelle und den beweglichen Schaltstücken entfallen. Das Getriebe enthält lediglich in die beweglichen Schaltstücke integrierte Steuerscheiben und an der Antriebswelle befestigte Hebel. Solche Steuerscheiben beanspruchen wenig Raum und tragen zugleich in platzsparender Weise eine Führungskurve oder zwei Führungskurven, welche die von den Hebeln abgegebene Kraft in Funktion der Winkelposition der Antriebswelle gesteuert an das zugeordnete bewegliche Schaltstück weiterleiten. Da solche Führungskurve bzw. Führungskurven exakt an die erwünschten Bewegungsabläufe des beweglichen Schaltstücks angepasst werden kann bzw. angepasst werden können, lassen sich so mit einfachen Mitteln auch komplizierte Bewegungsabläufe realisieren. Zudem können mit einer einzigen Antriebswelle praktisch beliebig viele Schaltstellen - einer oder mehrerer Phasen - angesteuert werden.

### KURZE BESCHREIBUNG DER ZEICHNUNGEN

Bevorzugte Ausführungsbeispiele der Erfindung und die damit erzielbaren weiteren Vorteile werden nachfolgend anhand von Zeichnungen näher erläutert. Hierbei zeigt:
- Fig.1: eine Aufsicht auf einen überwiegend quer zur Rohrachse längs einer Linie I-I (Fig.2) geführten Schnitt durch ein im wesentlichen rohrförmig ausgebildetes Gehäuse einer ersten Ausführungsform des Trennschalters nach der Erfindung,
- Fig.2: eine Aufsicht auf einen längs einer Linie II-II axial geführten Schnitt durch den Trennschalter nach Fig.1,
- Fig.3: eine Aufsicht auf eine im Trennschalter gemäss Fig.1 vorgesehene Steuerscheibe bei geschlossener Schaltstelle,
- Fig.4: eine Aufsicht auf die Steuerscheibe gemäss Fig.3, bei der alle Teile auf der Frontseite der Steuerscheibe entfernt und alle auf der Rückseite der Steuerscheibe vorgesehenen Teile gestrichelt dargestellt sind,
- Fig.5: eine Aufsicht auf die Steuerscheibe gemäss Fig.3 bei geöffneter Schaltstelle,
- Fig.6: eine Aufsicht auf die entsprechend Fig.4 dargestellte Steuerscheibe bei geöffneter Schaltstelle,
- Fig.7: eine Aufsicht auf einen längs einer Linie VII-VII (Fig.8) axial geführten Schnitt durch ein im wesentlichen rohrförmig ausgebildetes Gehäuse einer zweiten Ausführungsform des Trennschalters nach der Erfindung,
- Fig.8: eine Aufsicht auf einen längs der Linie VIII-VIII im wesentlichen quer zur Rohrachse geführten Schnitt durch den Trennschalter gemäss Fig.7, und
- Fig.9: eine Aufsicht auf einen im quer zur Rohrachse geführten Schnitt durch ein im wesentlichen rohrförmig ausgebildetes Gehäuse einer dritten Ausführungsform des Trennschalters nach der Erfindung.

### WEGE ZUR AUSFÜHRUNG DER ERFINDUNG

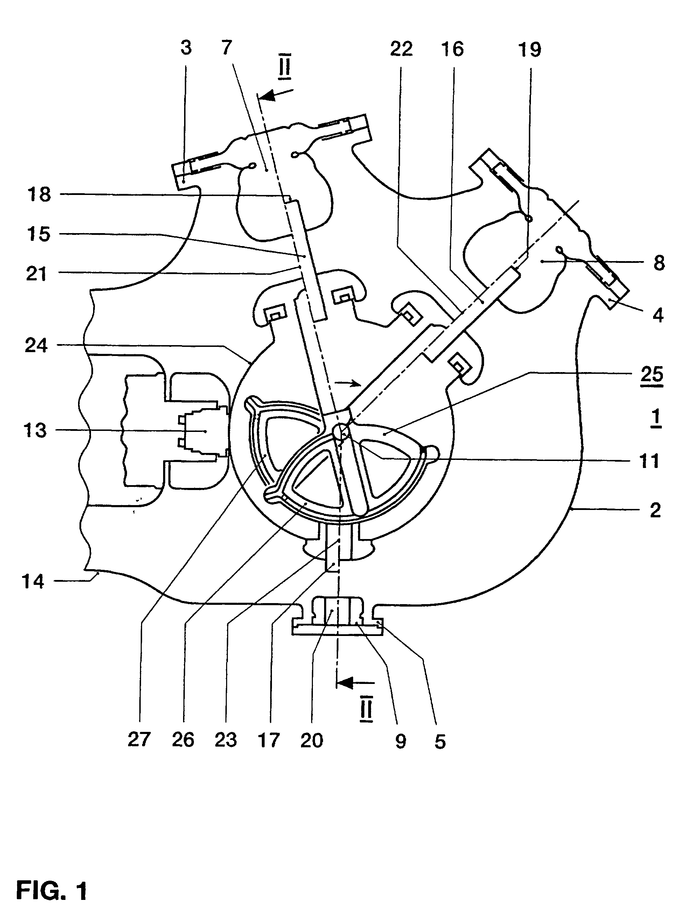

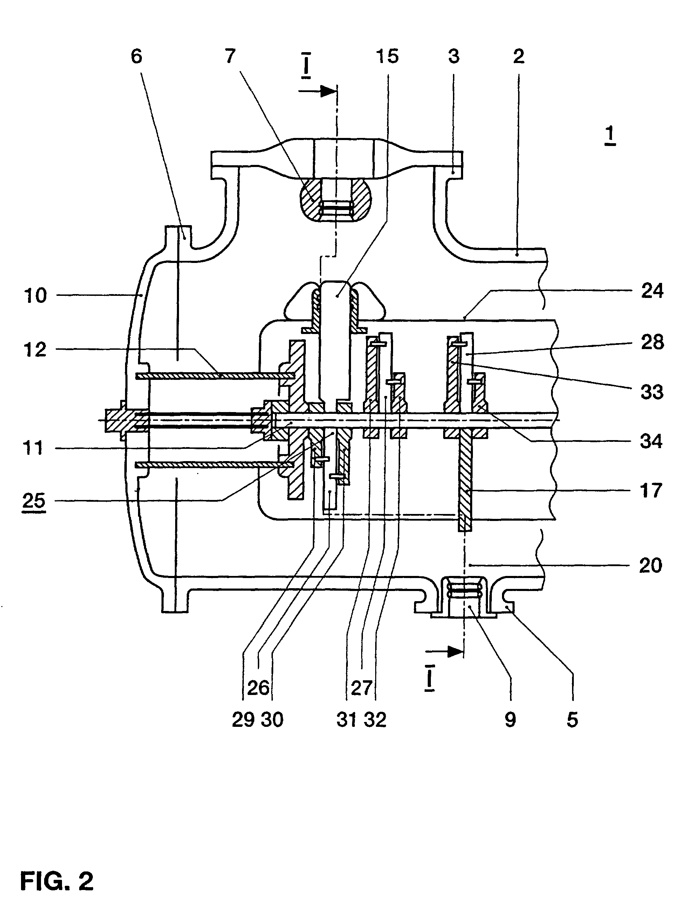

In allen Figuren bezeichnen gleiche Bezugszeichen gleichwirkende Teile. Der in den Figuren 1 und 2 dargestellte und mit dem Bezugszeichen 1 gekennzeichnete Trennschalter weist ein mit Isoliergas, wie etwa SF₆ von einigen bar Druck, gefülltes, im wesentlichen rohrförmig ausgebildetes metallenes Gehäuse 2 auf. Das Trennschaltergehäuse 2 befindet sich auf Erdpotential und weist an seiner Mantelfäche vier Öffnungen auf, welche jeweils von einem von vier rohrförmigen Flanschansätzen 3, 4, 5 und 6 begrenzt sind. Am Flanschansatz 3 bzw. 4 ist mit Hilfe eines nicht bezeichneten Isolators ein gegenüber dem Trennschaltergehäuse 2 elektrisch isoliertes feststehendes Schaltstück 7 bzw. 8 abgestützt. Der Flanschansatz 5 hingegen trägt ein mit dem Trennschaltergehäuse 2 in elektrisch leitender Weise verbundenes feststehendes Schaltstück 9. Der Flanschansatz 6 trägt einen metallenen Montagedeckel 10, durch den in gasdichter Weise eine Antriebswelle 11 ins Innere des Trennschaltergehäuses 2 geführt ist. Die Antriebswelle 11 ist in einem am Montagedeckel 10 befestigten hohlen Isolator 12 geführt. Eine nicht bezeichnete fünfte Öffnung des Trennschaltergehäuses 2 wird von einem in elektrisch isolierender Weise einen Stromanschluss 13 tragenden Flanschansatz 14 begrenzt.

Mit den Bezugszeichen 15, 16 und 17 sind im wesentlichen stiftförmig ausgebildete, bewegliche Schaltstücke bezeichnet. Das bewegliche Schaltstück 15 und das feststehende Schaltstück 7 bilden eine Schaltstelle 18, das bewegliche Schaltstück 16 und das feststehende Schaltstück 8 eine Schaltstelle 19 und das bewegliche Schaltstück 17 und das feststehende Schaltstück 9 eine Schaltstelle 20. Die drei Schaltstellen 18, 19 bzw. 20 sind im wesentlichen axialsymmetrisch ausgebildet. Längs der jeweils zugeordneten Schaltstellenachsen 21, 22 bzw. 23 sind die beweglichen Schaltstücke 15, 16 bzw. 17 verschiebbar angebracht. Die beweglichen Schaltstücke 15, 16 bzw. 17 sind über nicht bezeichnete Gleitkontakte (Fig.2) und eine Abschirmung 24 mit dem Stromanschluss 13 elektrisch leitend verbunden. Die Schaltstellenachsen 21 und 22 stehen senkrecht auf der Achse der Antriebswelle 11 und sind gegeneinander um einen Winkel von typischerweise 45° bis 180° geneigt. An das feststehende Schaltstück 7 bzw. 8 kann in elektrisch leitender Weise eine Sammelschiene angeschlossen sein. Die Schaltstellen 18 und 19 wirken dann jeweils als Sammelschienentrenner. Da das feststehende Schaltstück 9 geerdet ist, wirkt die Schaltstelle 23 als Erder. Der Stromanschluss 13 ist im allgemeinen mit dem sammelschienenseitigen Abgang eines Leistungsschalters verbunden.

Alternativ können die beiden Schaltstellen 18 und 19 auch in einem Leitungsabgang angeordnet sein.

Mit einem Getriebe 25 wird Kraft von der Antriebswelle 11 auf die beweglichen Schaltstücke 15, 16 und 17 übertragen. Das Getriebe 25 weist für jede der Schaltstellen 18, 19 und 20 eine mit dem zugeordneten beweglichen Schaltstück 15, 16, 17 fest verbundene, quer zur Achse der Antriebswelle 11 ausgerichtete und verschiebbare Steuerscheibe 26, 27, 28 auf sowie mindestens zwei axial gegeneinander versetzte, an der Antriebswelle 11 befestigte und mit der Steuerscheibe 26 bzw. 27 bzw. 28 zusammenwirkende Hebel 29, 30 bzw. 31, 32 bzw. 33, 34. Beim Drehen der Antriebswelle 11 im Uhrzeigersinn sind die Hebel 29, 31, 33 zum Einschalten und die Hebel 30, 32, 34 zum Ausschalten und beim Drehen der Antriebswelle 11 im Gegenuhrzeigersinn die Hebel 30, 32, 34 zum Einschalten und die Hebel 29, 31, 33 zum Ausschalten kraftschlüssig mit den Steuerscheiben 26, 27, 28 gekoppelt.

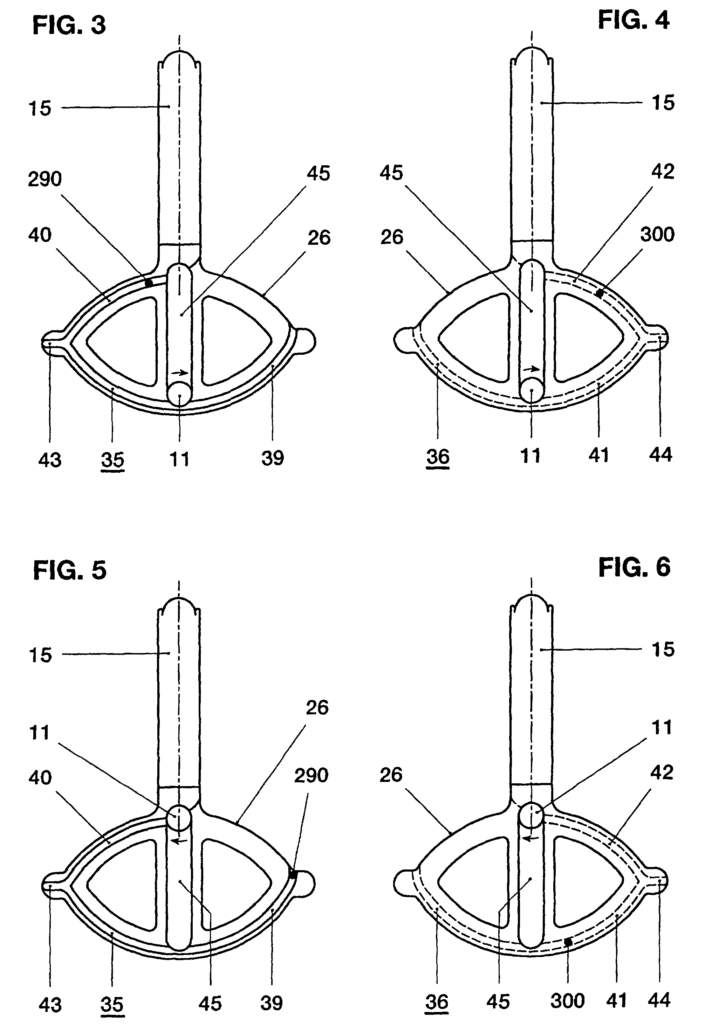

Der Aufbau einer typischen Steuerscheibe, beispielsweise der Steuerscheibe 26, ist aus den Figuren 3 bis 6 ersichtlich. Die Steuerscheibe weist auf der Frontseite eine Führungskurven 35 und auf der Rückseite eine dazu spiegelbildlich angeordnete Führungskurve 36 auf. Die Führungskurve 35 nimmt beim Drehen der Antriebswelle 11 ein am Hebel 29 befestigtes Führungsteil 290 und die Führungskurve 36 ein am Hebel 30 befestigtes Führungsteil 300 auf. Jede Führungskurve 35 bzw. 36 weist jeweils einen Abschnitt 39 bzw. 41 und einen an diesen Abschnitt anschliessenden Abschnitt 40 bzw. 42 sowie eine zwischen den beiden Abschnitten 39 und 41 bzw. 40 und 42 vorgesehene Anschlagstelle 43 bzw. 44 auf. Ferner weist die Steuerscheibe ein in Richtung der Schaltstellenachse 21 erstrecktes Langloch 45. Die Antriebswelle ist durch dieses Langloch geführt und führt die Steuerscheibe 26 in Richtung der Schaltstellenachse 21. Bei geschlossener Schaltstelle 18 schlägt das Langloch 45 mit seinem unteren Ende (Figuren 3 und 4) und bei geöffneter Schaltstelle mit seinem entgegengesetzt angeordneten oberen Ende (Figuren 5 und 6) an der Antriebswelle 11 an.

Die Wirkungsweise dieses Trennschalters ist wie folgt: Im Einschaltzustand der Schaltstelle 18 (Figuren 3 und 4) kontaktiert das bewegliche Schaltstück 15 das feststehende Schaltstück 7. Die mit dem beweglichen Schaltstück 15 fest verbundene Steuerscheibe 26 ist nach oben geführt und schlägt mit dem unteren Ende des Langlochs 45 an der Antriebswelle 11 an. Das am Hebel 29 befestigte Führungsteil 290 kontaktiert den Abschnitt 40 und stellt so sicher, dass bei ruhender Antriebswelle 11 die Steuerscheibe 26 und damit auch das bewegliche Schaltstück 15 festgesetzt sind. Zugleich kontaktiert das am Hebel 30 befestigte Führungsteil 300 den Abschnitt 42 und setzt so zusätzlich das bewegliche Schaltstück 15 fest.

Zum Öffnen der Schaltstelle 18 wird die Antriebswelle 11 im Uhrzeigersinn (vgl. auch Fig.1) gedreht. Die Führungsteile 290 und 300 werden hierbei zunächst entlang den Kurvenabschnitten 40 und 42 geführt. Diese Abschnitte sind im wesentlichen als Kreisbögen ausgebildet. Das Zentrum der zugeordneten Kreise befindet sich auf der Achse der Antriebswelle 11. Solange das Führungsteil 290 im Abschnitt 40 geführt wird, bleibt die Steuerscheibe 26 und damit auch das bewegliche Schaltstück 15 unverändert. Nach einer durch die verbleibende Bogenlänge des Abschnitts 40 vorgegebenen Zeit tritt das Führungsteil 290 aus dem Abschnitt 40 aus. Danach schlägt das Führungsteil 300 auf die Anschlagstelle 44 und werden nun die Steuerscheibe 26 und das bewegliche Schaltstück 15 solange nach unten verschoben bis die Antriebswelle 11 ans obere Ende des Langlochs 45 gelangt (Figuren 5 und 6). Die Schaltstelle 18 ist dann geöffnet. Durch Weiterdrehen der Antriebswelle 11 im Uhrzeigersinn wird das Führungsteil 300 im ebenfalls als Kreisbogen ausgebildeten Abschnitt 41 bewegt und kontaktiert nun das Führungsteil 290 den ebenfalls als Kreisbogen ausgebildeten Abschnitt 39 der Führungskurve 35. Das bewegliche Schaltstück 15 ist so in der Ausschaltposition festgesetzt.

Beim Weiterdrehen der Antriebswelle im Uhrzeigersinn werden die Führungsteile 290 und 300 entlang den Abschnitten 39 und 41 geführt. Die Steuerscheibe 26 und damit auch das bewegliche Schaltstück 15 bleiben in Ruhe. lm Laufe dieser weiteren Drehbewegung des Antriebswelle 11 können bei ruhendem Schaltstück 15 Schaltstellungsänderungen an den anderen Schaltstellen 19, 20 vorgenommen werden.

Bei weiterem Verdrehen der Welle 11 im Uhrzeigersinn verlässt das Führungsteil 300 die Führungskurve 36 und schlägt danach das Führungsteil 290 an der Anschlagstelle 43 an. Die Steuerscheibe 26 und damit auch das bewegliche Schaltstück 15 werden nun wieder nach oben in die Einschaltposition geführt. In der Einschaltposition werden dann die Steuerscheibe 26 und das bewegliche Schaltstück 15 festgesetzt, indem das Führungsteil 290 den kreisbogenförmig ausgebildeten Abschnitt 40 und das Führungsteil 300 den kreisbogenförmig ausgebildeten Abschnitt 42 kontaktiert (Figuren 3 und 4).

Alternativ kann die Antriebswelle 11 auch im Gegenuhrzeigersinn betätigt werden. Das Führungsteil 300 schlägt dann von unten auf die Anschlagstelle 44 auf und führt dann die Steuerscheibe 26 und damit auch das bewegliche Schaltstück 15 von der Ausschalt- in die Einschaltposition. In entsprechender Weise schlägt dann das Führungsteil 290 von oben auf die Anschlagstelle 43 auf und führt dann die Steuerscheibe 26 und damit auch das bewegliche Schaltstück 15 von der Einschalt- in die Ausschaltposition.

Eine besonders geringe Bautiefe in axialer Richtung wird erreicht, wenn die Führungskurven 35, 36 jeweils als Nut in die Steuerscheibe eingeformt sind. Die Führungsteile 290, 300 können dann als in die Nuten eingreifende Nocken ausgebildet sein.

Die beiden Führungskurven 35, 36 sind auf entgegengesetzten Seiten der Steuerscheibe 26 angeordnet. Sie können aber auch jeweils auf einer von zwei mit dem beweglichen Schaltstück 15 verbundenen Steuerscheiben angeordnet sein. In diesem Fall wird nur ein zwischen diesen beiden Steuerscheiben angeordneter und die zwei Führungsteile 290, 300 enthaltender Hebel benötigt.

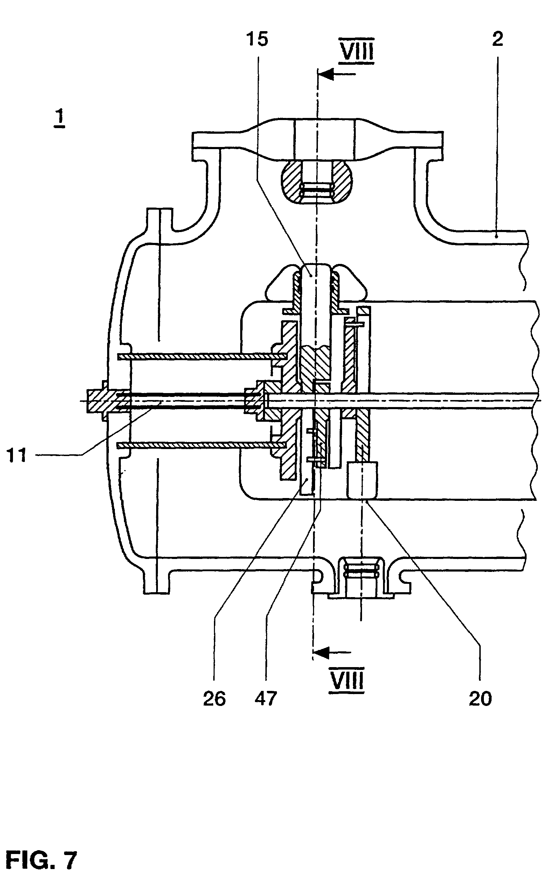

In den Ausführungsformen gemäss den Figuren 7 bis 9 sind die Führungskurven in einer einzigen Führungskurve 46 integriert. Es reicht dann eine Steuerscheibe 26, 28 und ein an der Antriebswelle 11 befestigter Hebel 47 aus, um den erwünschten Bewegungsablauf des beweglichen Schaltstücks 15, 17 zu erzielen.

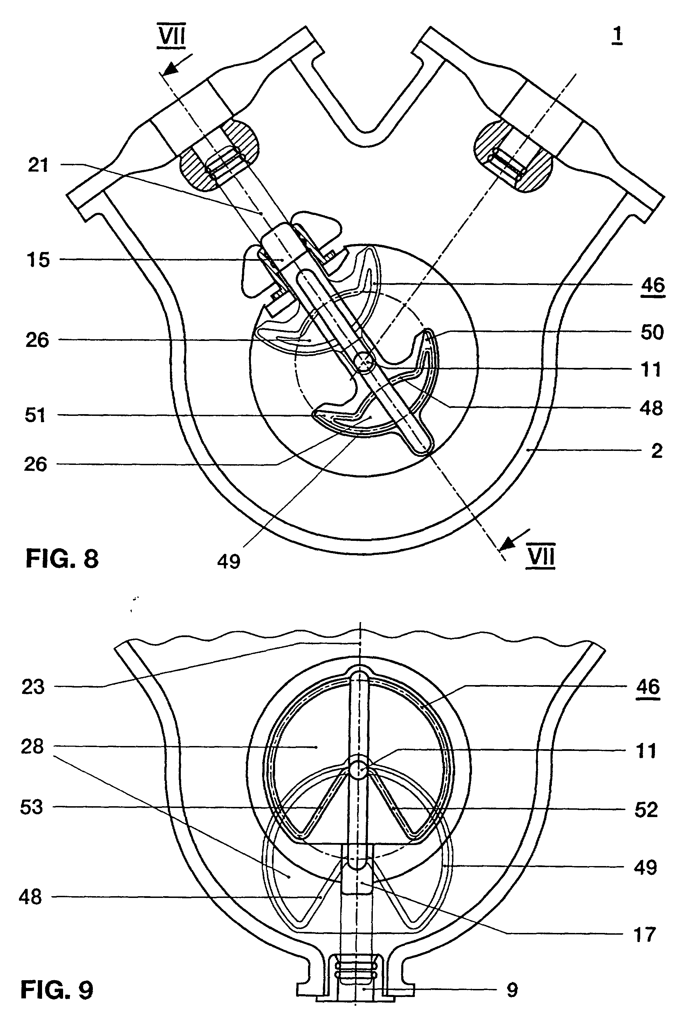

Die Führungskurve 46 weist bei der Ausführungsform gemäss Fig.8 zwei kreisbogenförmig ausgebildete Abschnitte 48, 49 sowie zwei zwischen diesen beiden Abschnitten angeordnete Anschlagstellen 50, 51 auf. Diese Anschlagstellen sind als schräg zur Schaltstellenachse 21 angeordnete Kurvenabschnitte ausgebildet. Mit einer solchen Führungskurve lassen sich Bewegungsabläufe für das bewegliche Schaltstück 15 realisieren, wie sie für einen in einer Doppelsammelschienenanlage vorgesehenen Sammelschienentrenner typisch sind.

Die Führungskurve 46 kann je nach Anforderung an den Bewegungsablauf des beweglichen Schaltstücks unterschiedlich modifiziert ausgebildet sein. Ist das bewegliche Schaltstück Teil eines Erders, so empfiehlt es sich, die aus Fig.9 ersichtliche Ausführungsform der Führungskurve 46 zu verwenden. Bei dieser Führungskurve umfasst der kreisbogenförmig ausgebildete Abschnitt 49 einen Winkelbereich von ca. 270° und geht an seinen beiden Enden in Kurvenabschnitte 52 bzw. 53 über, welche im wesentlichen radial ausgerichtet sind und schräg zur Schaltstellenachse 23 angeordnet sind. Die Kurvenabschnitte 52, 53 wirken als Anschläge und verschieben die Steuerscheibe 28 und damit das bewegliche Schaltstück 17 in Einschalt- bzw. in Ausschaltrichtung. In dem kurzen zwischen den Enden der beiden Abschnitte 52 und 53 vorgesehenen kreisbogenförmig ausgebildeten Abschnitt 48 der Führungskurve 46 wird die Steuerscheibe 28 und damit auch das bewegliche Schaltstück 17 in der Einschaltposition gehalten.

### BEZUGSZEICHENLISTE

- 1: Trennschalter
- 2: Trennschaltergehäuse
- 3, 4, 5, 6: Flanschansätze
- 7, 8, 9: feststehende Schaltstücke
- 10: Montagedeckel
- 11: Antriebswelle
- 12: Isolator
- 13: Stromanschluss
- 14: Flanschansatz
- 15, 16, 17: bewegliche Schaltstücke
- 18, 19, 20: Schaltstellen
- 21, 22, 23: Schaltstellenachsen
- 24: Abschirmung
- 25: Getriebe
- 26, 27, 28: Steuerscheiben
- 29, 30, 31,: Hebel
- 32, 33, 34 35, 36: Führungskurven
- 39, 40, 41, 42: Kurvenabschnitte
- 43, 44: Anschlagstellen
- 45: Langloch
- 46: Führungskurve
- 47: Hebel
- 48, 49: Kurvenabschnitte
- 50, 51: Anschlagstellen
- 52, 53: Kurvenabschnitte
- 290, 300: Führungsteile

## Patentansprüche

1. Trennschalter (1) mit einem Trennschaltergehäuse (2), mindestens zwei im Trennschaltergehäuse (2) angeordneten, axialsymmetrisch ausgebildeten Schaltstellen (18, 19, 20) mit jeweils einem feststehenden (7, 8, 9) und einem längs der Schaltstellenachse (21, 22, 23) beweglichen Schaltstück (15, 16, 17), einer ins Trennschaltergehäuse (2) geführten Antriebswelle (11) und mit einem Kraft von der Antriebswelle (11) auf das bewegliche Schaltstück (15, 16, 17) übertragenden Getriebe (25), **dadurch gekennzeichnet, dass** das Getriebe (25) für jede der Schaltstellen (18, 19, 20) mindestens eine mit dem beweglichen Schaltstück (15, 16, 17) fest verbundene, quer zur Wellenachse (11) ausgerichtete und verschiebbare Steuerscheibe (26, 27, 28) aufweist sowie mindestens einen an der Antriebswelle (11) befestigten und mit der Steuerscheibe (26, 27, 28) zusammenwirkenden Hebel (29,...,34; 47); wobei
die Steuerscheibe (26, 28) eine Führungskurve (46) aufweist, welche ein am Hebel (47) befestigtes Führungsteil beim Drehen der Welle (11) aufnimmt.

2. Trennschalter nach Anspruch 1, **dadurch gekennzeichnet, dass** die Führungskurve (46) zwei kreisbogenförmig ausgebildete Abschnitte (48, 49) sowie zwei zwischen diesen beiden Abschnitten (48, 49) angeordnete Anschlagstellen (50, 51; 52, 53) aufweist.

3. Trennschalter nach Anspruch 2, **dadurch gekennzeichnet, dass** die Anschlagstellen (52, 53) schräg zur Schaltstellenachse (23) angeordnete Kurvenabschnitte sind.

4. Trennschalter (1) mit einem Trennschaltergehäuse (2), mindestens zwei im Trennschaltergehäuse (2) angeordneten, axialsymmetrisch ausgebildeten Schaltstellen (18, 19, 20) mit jeweils einem feststehenden (7, 8, 9) und einem längs der Schaltstellenachse (21, 22, 23) beweglichen Schaltstück (15, 16, 17), einer ins Trennschaltergehäuse (2) geführten Antriebswelle (11) und mit einem Kraft von der Antriebswelle (11) auf das bewegliche Schaltstück (15, 16, 17) übertragenden Getriebe (25), **dadurch gekennzeichnet, dass** das Getriebe (25) für jede der Schaltstellen (18, 19, 20) mindestens eine mit dem beweglichen Schaltstück (15, 16, 17) fest verbundene, quer zur Wellenachse (11) ausgerichtete und verschiebbare Steuerscheibe (26, 27, 28) aufweist, und dass an der Antriebswelle (11) zwei mit der Steuerscheibe (26) zusammenwirkende Hebel (29, 30) befestigt sind, von denen beim Drehen der Antriebswelle (11) im Uhrzeigersinn ein erster (29) beim Einschalten und ein zweiter (30) beim Ausschalten und beim Drehen der Antriebswelle (11) im Gegenuhrzeigersinn der zweite (30) beim Einschalten und der erste (29) beim Ausschalten kraftschlüssig mit der Steuerscheibe (26) gekoppelt sind, wobei
die Steuerscheibe (26) zwei Führungskurven (35, 36) aufweist, von denen eine erste (35) ein am ersten Hebel (29) und eine zweite (36) ein am zweiten Hebel (30) befestigtes Führungsteil (290, 300) beim Drehen der Welle (11) aufnimmt.

5. Trennschalter nach Anspruch 4, **dadurch gekennzeichnet, dass** die Führungskurve (35, 36) jeweils zwei im wesentlichen kreisbogenförmig ausgebildete Abschnitte (39 - 42) aufweist sowie eine zwischen diesen beiden Abschnitten vorgesehene Anschlagstelle (43, 44).

6. Trennschalter nach einem der Ansprüche 1 bis 5, **dadurch gekennzeichnet, dass** die Steuerscheibe (26) ein in Richtung der Schaltstellenachse (21) erstrecktes und die Antriebswelle (11) umfassendes Langloch (45) aufweist.

7. Trennschalter nach einem der Ansprüche 4 bis 6, **dadurch gekennzeichnet, dass** die beiden Führungskurven (35, 36) auf entgegengesetzten Seiten der Steuerscheibe (26) angeordnet sind.

8. Trennschalter nach einem der Ansprüche 4 bis 6, **dadurch gekennzeichnet, dass** die beiden Führungskurven (35, 36) jeweils auf einer von zwei Steuerscheiben angeordnet sind, und dass zwischen den beiden Steuerscheiben ein die zwei Führungsteile (290, 300) enthaltender Hebel angeordnet ist.

9. Trennschalter nach einem der Ansprüche 4 bis 8, **dadurch gekennzeichnet, dass** die beiden Führungskurven (35, 36) jeweils als Nut in die Steuerscheibe eingeformt sind.

10. Trennschalter nach einem der Ansprüche 4 bis 9, **dadurch gekennzeichnet, dass** die Hebel (29,...,34) in Richtung der Achse der Antriebswelle (11) axial gegeneinander versetzt sind.

11. Trennschalter nach einem der Ansprüche 1 bis 10, **dadurch gekennzeichnet, dass** die mindestens zwei Schaltstellen (18, 19) jeweils mit einer Sammelschiene oder einem Leitungsabgang elektrisch leitend verbindbar sind.

12. Trennschalter nach Anspruch 11, **dadurch gekennzeichnet, dass** ein feststehendes Schaltstück (9) einer dritten Schaltstelle (20) mit dem Trennschaltergehäuse (2) elektrisch leitend verbunden ist.

## Claims

1. Isolating switch (1) having an isolating switch housing (2), at least two switching points (18, 19, 20) which are arranged in the isolating switch housing (2), are of axially symmetrical design and each have one fixed switching element (7, 8, 9) and one switching element (15, 16, 17) which can move along the switching point axis (21, 22, 23), a drive shaft (11) leading into the isolating switch housing (2) and having a gearbox (25) which transmits power from the drive shaft (11) to the movable switching element (15, 16, 17), **characterized in that** the gearbox (25) has, for each of the switching points (18, 19, 20), at least one control cam (26, 27, 28) which is fixedly connected to the movable switching element (15, 16, 17), is aligned transversely with respect to the shaft axis (11) and is displaceable, as well as at least one lever (29, ..., 34; 47) which is attached to the drive shaft (11) and interacts with the control cam (26, 27, 28), the control cam (26, 28) having a guide cam (46) which, as the shaft (11) turns, receives a guide part attached to the lever (47).

2. Isolating switch according to Claim 1, **characterized in that** the guide cam (46) has two sections (48, 49) of arcuate design, as well as two stop points (50, 51; 52, 53) which are arranged between these two sections (48, 49).

3. Isolating switch according to Claim 2, **characterized in that** the stop points (52, 53) are cam sections arranged obliquely with respect to the switching point axis (23).

4. Isolating switch (1) having an isolating switch housing (2), at least two switching points (18, 19, 20) which are arranged in the isolating switch housing (2), are of axially symmetrical design and each have one fixed switching element (7, 8, 9) and one switching element (15, 16, 17) which can move along the switching point axis (21, 22, 23), a drive shaft (11) leading into the isolating switch housing (2) and having a gearbox (25) which transmits power from the drive shaft (11) to the movable switching element (15, 16, 17), **characterized in that** the gearbox (25) has, for each of the switching points (18, 19, 20), at least one control cam (26, 27, 28) which is fixedly connected to the movable switching element (15, 16, 17), is aligned transversely with respect to the shaft axis (11) and is displaceable, and **in that** two levers (29, 30) which interact with the control cam (26) are attached to the drive shaft (11), of which levers (29, 30) a first (29) is frictionally coupled to the control cam (26) in the case of switching on, and a second (30) is frictionally coupled thereto (26) in the case of switching off, as the drive shaft (11) turns in the clockwise sense, and the second (30) is frictionally connected to the control cam (26) in the case of switching on, and the first (29) is frictionally connected thereto (26) in the case of switching off, as the drive shaft (11) turns in the counter-clockwise sense, in the case of switching off, the control cam (26) having two guide cams (35, 36), of which, as the shaft (11) turns, a first guide cam (35) receives a guide part (290) which is attached to the first lever (29) and a second guide cam (36) receives a guide part (300) which is attached to the second lever (30).

5. Isolating switch according to Claim 4, **characterized in that** the guide cam (35, 36) has in each case two sections (39 - 42) which are essentially of arcuate design, as well as a stop point (43, 44) which is provided between these two sections.

6. Isolating switch according to one of Claims 1 to 5, **characterized in that** the control cam (26) has an elongated hole (45) which extends in the direction of the switching point axis (21) and comprises the drive shaft (11).

7. Isolating switch according to one of Claims 4 to 6, **characterized in that** the two guide cams (35, 36) are arranged on opposite sides of the control cam (26).

8. Isolating switch according to one of Claims 4 to 6, **characterized in that** the two guide cams (35, 36) are each arranged on one of two control cams, and **in that** a lever which contains the two guide parts (290, 300) is arranged between the two control cams.

9. Isolating switch according to one of Claims 4 to 8, **characterized in that** the two guide cams (35, 36) are each formed as a groove in the control cam.

10. Isolating switch according to one of Claims 4 to 9, **characterized in that** the levers (29, ..., 34) are axially offset with respect to one another in the direction of the axis of the drive shaft (11).

11. Isolating switch according to one of Claims 1 to 10, **characterized in that** the at least two switching points (18, 19) are connected in an electrically conductive fashion in each case to a busbar or an outgoing feeder.

12. Isolating switch according to Claim 11, **characterized in that** a fixed switching element (9) of a third switching point (20) is connected to the isolating switch housing (2) in an electrically conductive fashion.

## Revendications

1. Disjoncteur (1) présentant un boîtier (2) de disjoncteur, au moins deux emplacements de commutation (18, 19, 20) disposés dans le boîtier (2) du disjoncteur et configurés à symétrie axiale, présentant chacun une pièce de commutation fixe (7, 8, 9) et une pièce de commutation mobile (15, 16, 17) suivant l'axe (21, 22, 23) des emplacements de commutation, un arbre d'entraînement (11) guidé dans le boîtier (2) du disjoncteur et une transmission (25) qui transmet une force entre l'arbre d'entraînement (11) et la pièce de commutation mobile (15, 16, 17), **caractérisé en ce que** pour chacun des emplacements de commutation (18, 19, 20), la transmission (25) présente au moins une came de commande (26, 27, 28) reliée solidairement à la pièce de commutation mobile (15, 16, 17), orientée transversalement par rapport à l'axe de l'arbre (11) et déplaçable, ainsi qu'au moins un levier (29, ..., 34; 47) fixé sur l'arbre d'entraînement (11) et coopérant avec la came de commande (26, 27, 28), la came de commande (26, 28) présentant une courbe de guidage (46) qui reçoit une pièce de guidage fixée au levier (47) lors de la rotation de l'arbre (11).

2. Disjoncteur selon la revendication 1, **caractérisé en ce que** la courbe de guidage (46) présente deux parties (48, 49) configurées en arc de cercle ainsi que deux emplacements de butée (50, 51; 52, 53) disposés entre ces deux parties (48, 49).

3. Disjoncteur selon la revendication 2, **caractérisé en ce que** les emplacements de butée (52, 53) sont des parties de courbe disposées obliquement par rapport à l'axe (23) des emplacements de commutation.

4. Disjoncteur (1) présentant un boîtier (2) de disjoncteur, au moins deux emplacements de commutation (18, 19, 20) disposés dans le boîtier (2) du disjoncteur et configurés à symétrie axiale, présentant chacun une pièce de commutation fixe (7, 8, 9) et une pièce de commutation mobile (15, 16, 17) suivant l'axe (21, 22, 23) des emplacements de commutation, un arbre d'entraînement (11) guidé dans le boîtier (2) du disjoncteur et une transmission (25) qui transmet une force entre l'arbre d'entraînement (11) et la pièce de commutation mobile (15, 16, 17), **caractérisé en ce que** pour chacun des emplacements de commutation (18, 19, 20), la transmission (25) présente au moins une came de commande (26, 27, 28) reliée solidairement à la pièce de commutation mobile (15, 16, 17), orientée transversalement par rapport à l'axe de l'arbre (11) et déplaçable, et **en ce que** deux leviers (29, 30) coopérant avec la came de commande (26) sont fixés sur l'arbre d'entraînement (11), parmi lesquels, lors de la rotation de l'arbre d'entraînement (11) dans le sens des aiguilles d'une montre, un premier levier (29) est accouplé en correspondance mécanique à la came de commande (26) lors du branchement et un deuxième levier (30) est accouplé en correspondance mécanique à la came de commande (26) lors du débranchement, et lors de la rotation de l'arbre d'entraînement (11) dans le sens contraire des aiguilles d'une montre, le deuxième levier (30) est accouplé en correspondance mécanique à la came de commande (26) lors du branchement et le premier levier (29) est accouplé en correspondance mécanique à la came de commande (26) lors du débranchement, la came de commande (26) présentant deux courbes de guidage (35, 36) parmi lesquelles une première (35) reçoit lors de la rotation de l'arbre (11) une pièce de guidage (290, 300) fixée au premier levier (29) et une deuxième (36) reçoit lors de la rotation de l'arbre (11) une pièce de guidage (290, 300) fixée au deuxième levier (30).

5. Disjoncteur selon la revendication 4, **caractérisé en ce que** chaque courbe de guidage (35, 36) présente deux parties (39-42) configurées essentiellement en arc de cercle ainsi qu'un emplacement de butée (43, 44) prévu entre ces deux parties.

6. Disjoncteur selon l'une des revendications 1 à 5, **caractérisé en ce que** la came de commande (26) présente un trou oblong (45) qui s'étend dans la direction de l'axe (21) des emplacements de commutation et qui entoure l'arbre d'entraînement (11).

7. Disjoncteur selon l'une des revendications 4 à 6, **caractérisé en ce que** les deux courbes de guidage (35, 36) sont disposées sur des côtés opposés de la came de commande (26).

8. Disjoncteur selon l'une des revendications 4 à 6, **caractérisé en ce que** les deux courbes de guidage (35, 36) sont chacune disposées sur l'une parmi deux cames de commande, et **en ce qu'**entre les deux cames de commande est disposé un levier contenant les deux pièces de guidage (290, 300).

9. Disjoncteur selon l'une des revendications 4 à 8, **caractérisé en ce que** les deux courbes de guidage (35, 36) sont chacune formées en tant que rainure dans la came de commande.

10. Disjoncteur selon l'une des revendications 4 à 9, **caractérisé en ce que** les leviers (29, ..., 34) sont décalés axialement l'un par rapport à l'autre dans la direction de l'axe de l'arbre d'entraînement (11).

11. Disjoncteur selon l'une des revendications 1 à 10, **caractérisé en ce que** les au moins deux emplacements de commutation (18, 19) peuvent chacun être reliés de manière électriquement conductrice à un rail collecteur ou à un départ de conducteur.

12. Disjoncteur selon la revendication 11, **caractérisé en ce qu'**une pièce de commutation fixe (9) d'un troisième emplacement de commutation (20) est reliée de manière électriquement conductrice au boîtier (2) du disjoncteur.
